# EUROPEAN PATENT APPLICATION

(11) **EP 4 319 249 A1**
(43) Date of publication of application: **07.02.2024**
(21) Application number: 22779150.6
(22) Date of filing: 01.04.2022
(51) Int. Cl.: H04W 24/02

(54) **TRANSMISSION PROCESSING METHOD, AND TERMINAL AND NETWORK SIDE DEVICE**

(30) Priority: 01.04.2021 CN 202110357886
(71) Applicant: Vivo Mobile Communication Co., Ltd., Dongguan, Guangdong 523863 (CN)
(72) Inventor: LI, Dongru, Dongguan, Guangdong 523863 (CN); SUN, Xiaodong, Dongguan, Guangdong 523863 (CN); CHEN, Xiaohang, Dongguan, Guangdong 523863 (CN); JIANG, Wei, Dongguan, Guangdong 523863 (CN); YOU, Huazheng, Dongguan, Guangdong 523863 (CN)
(74) Representative: Lavoix
(86) International application number: PCT/CN2022/084900
(87) International publication number: WO 2022/206970

(57) **Abstract**

This application discloses a transmission processing method, a terminal, and a network-side device, and pertains to the field of communication technologies. The transmission processing method in embodiments of this application includes: acquiring, by a terminal, configuration information of a wake-up signal; and within a first time period, monitoring, based on the configuration information, the wake-up signal by the terminal, where the first time period is a time period in which first-physical-downlink-control-channel PDCCH monitoring is skipped; where the configuration information includes at least one of the following: wake-up signal type; transmission configuration; monitoring start time point; monitoring duration; monitoring occasion; and monitoring period.

## Description

### CROSS-REFERENCE TO RELATED APPLICATIONS

This application claims priority to Chinese Patent Application No. 202110357886.5, filed in China on April 1, 2021, which is incorporated herein by reference in its entirety.

### TECHNICAL FIELD

This application pertains to the field of communication technologies, and specifically, relates to a transmission processing method, a terminal, and a network-side device.

### BACKGROUND

Extended reality (Extended Reality, XR) services are quasi-periodic services. That is, without considering jitter, service packets (which can be understood as frames of data) arrive at equal time intervals, the intervals are small floating-point numbers, and XR services are highly sensitive to delay.

In addition, service packets require processes such as data compression and rendering at a server side, resulting in certain jitter of an actual time at which service packets reach a base station side. The jitter can be understood as a forward or backward offset to an ideal periodic arrival time position by a certain range. In the prior art, it is possible to avoid degradation of transmission performance due to the jitter of service packets but at the cost of the energy-saving effect of terminals. Similarly, the energy-saving effect of terminals can be guaranteed at the cost of transmission performance.

### SUMMARY

Embodiments of this application provide a transmission processing method, a terminal, and a network-side device, which can satisfy data transmission performance, reduce scheduling delay, and also prevent impact on the energy-saving effect of a terminal.

According to a first aspect, a transmission processing method is provided, and the method includes:
acquiring, by a terminal, configuration information of a wake-up signal; and
monitoring, by the terminal, the wake-up signal based on the configuration information within a first time period, where the first time period is a time period in which first-physical-downlink-control-channel PDCCH monitoring is skipped; where
the configuration information includes at least one of the following:
   wake-up signal type;
   transmission configuration;
   monitoring start time point;
   monitoring duration;
   monitoring occasion; and
   monitoring period.

According to a second aspect, a transmission processing apparatus is provided, and the apparatus includes:
an acquiring module, configured to acquire configuration information of a wake-up signal; and
a first processing module, configured to monitor the wake-up signal based on the configuration information within a first time period, where the first time period is a time period in which first-physical-downlink-control-channel PDCCH monitoring is skipped; where
the configuration information includes at least one of the following:
   wake-up signal type;
   transmission configuration;
   monitoring start time point;
   monitoring duration;
   monitoring occasion; and
   monitoring period.

According to a third aspect, a transmission processing method is provided, and the method includes:
transmitting, by a network-side device, configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

According to a fourth aspect, a transmission processing apparatus is provided, and the apparatus includes:
a transmitting module, configured to transmit configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

According to a fifth aspect, a terminal is provided. The terminal includes a processor, a memory, and a program or instructions stored in the memory and capable of running on the processor, where when the program or instructions are executed by the processor, the steps of the method according to the first aspect are implemented.

According to a sixth aspect, a terminal is provided. The terminal includes a processor and a communication interface, where the communication interface is configured to acquire configuration information of a wake-up signal; the processor is configured to monitor the wake-up signal based on the configuration information within a first time period, where the first time period is a time period in which first-physical-downlink-control-channel PDCCH monitoring is skipped; where
the configuration information includes at least one of the following:
wake-up signal type;
transmission configuration;
monitoring start time point;
monitoring duration;
monitoring occasion; and
monitoring period.

According to a seventh aspect, a network-side device is provided. The network-side device includes a processor, a memory, and a program or instructions stored in the memory and capable of running on the processor, where when the program or instructions are executed by the processor, the steps of the method according to the third aspect are implemented.

According to an eighth aspect, a network-side device is provided. The network-side device includes a communication interface, where the communication interface is configured to transmit configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

According to a ninth aspect, a readable storage medium is provided. The readable storage medium stores a program or instructions, and when the program or instructions are executed by a processor, the steps of the method according to the first aspect or the steps of the method according to the third aspect are implemented.

According to a tenth aspect, a chip is provided. The chip includes a processor and a communication interface, where the communication interface is coupled to the processor, and the processor is configured to run a program or instructions to implement the method according to the first aspect or implement the method according to the third aspect.

According to an eleventh aspect, a computer program/program product is provided. The computer program/program product is stored in a non-volatile storage medium, and the program/program product is executed by at least one processor to implement the method according to the first aspect or implement the method according to the third aspect.

According to a twelfth aspect, a communication device is provided and configured to implement the steps of the method according to the first aspect of the embodiments of this application or implement the steps of the method according to the third aspect of the embodiments of this application.

In the embodiments of this application, the terminal monitors the wake-up signal based on the acquired configuration information of the wake-up signal within a time period in which the first-PDCCH monitoring is skipped. In the embodiments of this application, the terminal monitors the wake-up signal within a time period in which the first-PDCCH monitoring is skipped to implement timely processing of data in the time period in which the first-PDCCH monitoring is skipped, thereby reducing transmission delay of this part of data packets and improving transmission performance. In addition, the terminal consumes very limited energy in wake-up signal monitoring. Therefore, the embodiments of this application can achieve the technical effects of guaranteeing data transmission performance without reducing energy-saving gain.

### BRIEF DESCRIPTION OF DRAWINGS

FIG. 1 is a block diagram of a wireless communication system;
FIG. 2 is a first schematic flowchart of a transmission processing method according to an embodiment of this application;
FIG. 3 is a first schematic application diagram of a method according to an embodiment of this application;
FIG. 4 is a second schematic application diagram of a method according to an embodiment of this application;
FIG. 5 is a structural diagram of an apparatus corresponding to FIG. 2;
FIG. 6 is a second schematic flowchart of a transmission processing method according to an embodiment of this application;
FIG. 7 is a structural diagram of an apparatus corresponding to FIG. 6;
FIG. 8 is a structural diagram of a communication device according to an embodiment of this application;
FIG. 9 is a structural diagram of a terminal according to an embodiment of this application; and
FIG. 10 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, "first" and "second" are usually used to distinguish objects of a same type and do not limit the number of objects. For example, there may be one or a plurality of first objects. In addition, "and/or" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. However, these technologies are also applicable to other applications than an NR system application, for example, the 6th (6th Generation, 6G) communication system.

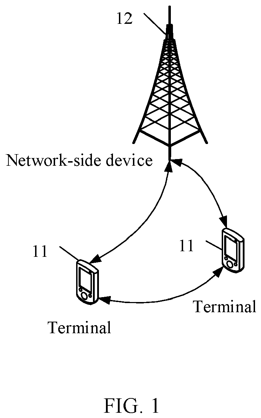

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or a vehicle user equipment (Vehicle User Equipment, VUE), and a pedestrian user equipment (Pedestrian User Equipment, PUE). The wearable device includes: smart watches, wristbands, earphones, glasses, and the like. It should be noted that the terminal 11 is not limited to any specific type in the embodiments of this application. The network-side device 12 may be a base station or a core network, where the base station may be referred to as a Node B, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (Evolved Node B, eNB), a home NodeB, a home evolved NodeB, a wireless local area network (Wireless Local Area Network, WLAN) access point, a wireless fidelity (Wireless Fidelity, Wi-Fi) node, a transmission reception point (Transmitting Receiving Point, TRP), or another appropriate term in the art. As long as the same technical effects are achieved, the base station is not limited to a specific technical term. It should be noted that the base station in the NR system is only taken as an example in the embodiments of this application, but a specific type of the base station is not limited.

It should be noted that XR services are quasi-periodic services. In other words, service packets arrive at equal time intervals, and the intervals are small floating-point numbers (non-positive integers) (for example, 30FPS (FPS represents the number of frames per second) 33.33 ms, 60FPS 16.67 ms, 120FPS 8.33 ms). In addition, XR services are highly sensitive to delay, with a packet delay budge (Packet Delay Budget, PDB) of about 10 ms for transmission over air interface.

In addition, service packets require processes such as data compression and rendering at a server side, resulting in certain jitter of an actual time at which the service packets reach a base station side. The jitter can be understood as a forward or backward offset to an ideal periodic arrival time position by a certain range. The offset of jitter follows a truncated Gaussian distribution, within a range of ±4 ms to an arrival time position of quasi-periodic service packets.

For example, a quasi-periodic arrival time of a packet on /a base station side is n (for example, measured in ms). Due to influences of the jitter, an actual arrival time of the packet is n+j, where j represents the magnitude of the jitter. For example, the jitter is -1 ms, meaning that the packet expected to reach at the time n actually reaches at a time of (n-1) ms.

It should be further noted that for the purpose of reducing reception activities for radio resource control (Radio Resource Control, RRC) idle (IDLE) state to truly turn off radio frequency (Radio Frequency, RF) and modem (MODEM) modules so as to significantly reduce power consumption for communication reception, a near-zero-power receiver may be introduced in a receiving module of a terminal. This near-zero-power receiver does not require complex RF module signal detection (such as amplification, filtering, and quantification) and modem signal processing, and performs only passive matched filtering and signal processing with lower power consumption. On the base station side, a wake-up signal is triggered on-demand to activate the near-zero-power receiver to acquire an activation notification, so as to trigger a series of procedures in the terminal, for example, turning on a radio frequency transceiver module, a baseband processing module, and the like. Such wake-up signals are generally some simple on-off keying signals. Thus, the receiver can acquire a wake-up notification through processes such as simple energy detection and subsequent possible sequence detection and identification.

Based on the above descriptions of the near-zero-power receiver, the wake-up signal used in this application can also be received using the above near-zero-power receiver.

The following describes in detail the transmission processing method provided in the embodiments of this application using some embodiments and application scenarios thereof with reference to the accompanying drawings.

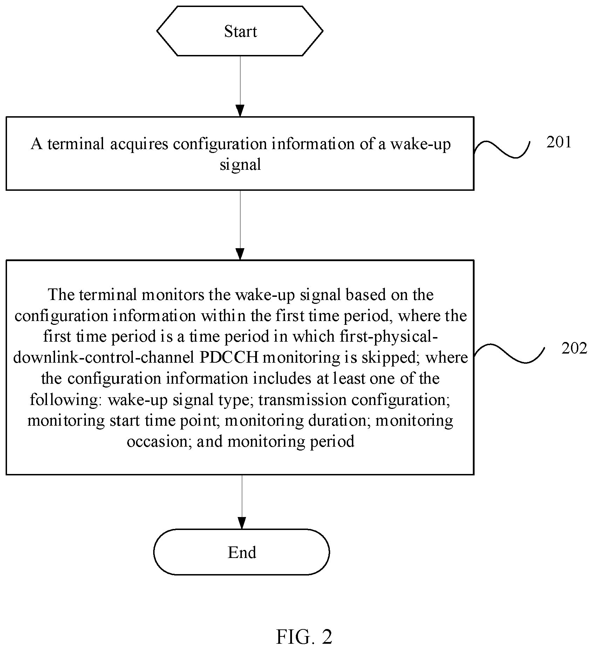

As shown in FIG. 2, a transmission processing method according to an embodiment of this application includes the following steps.

Step 201. A terminal acquires configuration information of a wake-up signal.

Here, the configuration information is used for the terminal to monitor the wake-up signal within a first time period, where the configuration information includes at least one of the following: wake-up signal type, transmission configuration, monitoring start time point, monitoring duration, monitoring occasion, and monitoring period.

Optionally, the configuration information includes information associated with service packet related information.

It should be noted that start time point of monitoring duration, a monitoring end time point, and an intermediate time point of monitoring duration that have the same technical effects as the monitoring start time point also fall within the protection scope of this embodiment. In addition, the monitoring duration may also be referred to as a monitoring time window.

Step 202. The terminal monitors the wake-up signal based on the configuration information within the first time period, where the first time period is a time period in which first-physical-downlink-control-channel (Physical Downlink Control Channel, PDCCH) monitoring is skipped.

As such, according to step 201 and step 202, the terminal monitors the wake-up signal based on the acquired configuration information of the wake-up signal within the time period in which the first-PDCCH monitoring is skipped. In this embodiment of this application, the terminal monitors the wake-up signal within the time period in which the first-PDCCH monitoring is skipped to implement timely processing of data that will arrive in the time period in which the first-PDCCH monitoring is skipped, thereby reducing packet transmission delay for the data and improving transmission performance. In addition, the terminal consumes very limited energy in wake-up signal monitoring. Therefore, this embodiment of this application can achieve the technical effects of guaranteeing data transmission performance without reducing energy-saving gain.

Specifically, XR service packets have jitter, so data may arrive within the time period in which the first-PDCCH monitoring is skipped. Therefore, with the foregoing steps performed to implement wake-up signal monitoring, the terminal can process data in a timely manner, thereby reducing packet transmission delay for the data and improving the transmission performance.

In this embodiment, the wake-up signal type is associated with operation to be performed after the wake-up signal has been detected and/or service type and priority. The transmission configuration includes one or more of occupied time-frequency resource, sub-carrier configuration, sequence, and power for the wake-up signal. A wake-up signal sequence may be a target reference signal (for example, a channel state information reference signal (Channel State Information Reference Signal, CSI-RS)) sequence, or certainly, may be a newly defined sequence.

It should be noted that the monitoring start time point for the wake-up signal can be understood as a start time point of the monitoring duration. The monitoring duration can be understood as a monitoring range, which is equivalent to a monitoring time window or detecting window.

Optionally, the monitoring start time point is associated with at least one of the following:
quasi-periodic arrival position of service packet;
jitter range of service packet; and
start position of discontinuous reception (Discontinuous Reception, DRX) onduration.

To be specific, the monitoring start time point may be the quasi-periodic arrival position of service packet, the DRX onduration start position, a position obtained by combination of the quasi-periodic arrival position of service packet and the jitter range of service packet, or the like. For example, the monitoring start time point is a maximum jitter position (that is, a negative jitter length position) before the quasi-periodic arrival position of service packet.

In addition, the quasi-periodic arrival position of service packet refers to an ideal periodic arrival position of service packet, that is, a periodic arrival position without considering data jitter or without data jitter.

Optionally, one or more monitoring occasions are present within the monitoring duration.

Certainly, the monitoring occasion is configured based on characteristics of services. For example, in terms of a wake-up signal for an XR service, monitoring occasions within a specific time range before and after a quasi-periodic arrival position of the service are more than monitoring occasions outside that specific time range.

Optionally, the monitoring duration is associated with at least one of the following:
jitter range of service packet;
positive jitter range of service packet; and
negative jitter range of service packet.

The positive jitter range of service packet refers to a jitter range of service packet following the quasi-periodic arrival position of the service, for example, 4 ms. The negative jitter range of service packet refers to a jitter range of service packet preceding the quasi-periodic arrival position of the service, for example, -4 ms. With reference to the positive jitter range and negative jitter range of service packet, a jitter range of service packet can be obtained, that is, [-4, 4] ms.

Optionally, the monitoring period is associated with at least one of the following:
DRX cycle; and
quasi-period of service packet.

To be specific, the monitoring period of the wake-up signal may be the DRX cycle, the quasi-period of service packet, or a new period obtained based on the DRX cycle and the quasi-period of service packet. The terminal can periodically monitor the wake-up signal based on the monitoring period configured.

In this embodiment, the time period in which the first-PDCCH monitoring is skipped, that is, the first time period includes at least one of the following:
discontinuous reception DRX outside active time;
DCI-indicated period in which the first-PDCCH monitoring is skipped;
active time of dormant bandwidth part (Bandwidth Part, BWP); and
active time of dormant search space group, where within the active time of dormant search space group, the first-PDCCH monitoring is skipped.

Here, the DRX outside active time (outside active time) can be understood as a time outside the DRX active time.

In a case that the first time period includes at least two of the above-mentioned time, the first time period may be a time period of a combination of the at least two or may be a time period of an overlapping part of the at least two. For example, in a case that the DRX outside active time is T1 to T2, the DCI-indicated period in which the first-PDCCH monitoring is skipped is T3 to T4, and the two have an overlapping time period of T2 to T3, the first time period is T1 to T4 or T2 to T3.

In addition, optionally, in this embodiment, the method further includes:
performing a downlink channel monitoring operation in a case that the terminal has detected the wake-up signal.

It can be understood that the downlink channel monitoring operation is performed based on the wake-up signal that has been detected. For example, the terminal turns on a video transceiver module, a baseband processing module, and the like for monitoring.

In an embodiment, in a case that the terminal has detected the wake-up signal in the period in which the first-PDCCH monitoring is skipped, the terminal performs the downlink channel monitoring operation.

It should be noted that the foregoing embodiment differs from the wake up indication in the prior art in that: in the prior art, content indicated by the wake up indication is stipulated as whether to start a next DRX onduration timer, which is equivalent to that an operation of LTE after the LTE has detected the wake up indication is to determine, based on the indication provided by the wake up indication, whether to perform PDCCH monitoring within the next DRX onduration. The wake-up indication is configured on the premise that DRX is configured for the terminal, meaning that a wake up indication field and the DRX configuration are associated with each other for use.

However, in this application, that in a case that the terminal has detected the wake-up signal, the downlink channel monitoring operation is performed immediately or after a specific time interval, regardless of whether DRX is configured for the terminal.

In consideration of different downlink channel implementations, optionally, in this embodiment, the performing a downlink channel monitoring operation in a case that the wake-up signal has been detected includes at least one of the following:
monitoring a second PDCCH; and
monitoring a physical downlink control channel PDSCH.

Here, the second PDCCH and the first PDCCH may be the same or different. In addition, the first PDCCH and/or the second PDCCH includes at least one of the following:
PDCCH carrying preset type of search space;
PDCCH carrying preset downlink control information (Downlink Control Information, DCI) format;
PDCCH associated with preset control resource set (Control Resource Set, CORESET); and
PDCCH carrying DCI scrambled by using preset radio network temporary identifier (Radio Network Temporary Identifier, RNTI).

For example, the first PDCCH may include PDCCH carrying type 3 common search space (Common Search Space, CSS) and PDCCH carrying UE specific search space (UE Specific Search Space, USS). In addition, for another example, the first PDCCH excludes PDCCH carrying DCI scrambled by using power-saving RNTI (Power Saving-RNTI, PS-RNTI). In other words, monitoring for the DCI cannot be skipped.

Further, optionally, the monitoring a second PDCCH includes at least one of the following:
starting a DRX onduration timer or a DRX inactivity timer;
switching to a non-dormant BWP;
switching to a non-dormant search space group;
turning off a first timer that is running, where the terminal skips the first-PDCCH monitoring when the first timer is on; and
stopping performing a first-PDCCH monitoring skipping indication.

To be specific, the second PDCCH can be monitored through at least one of the foregoing options, and at least one of the foregoing options can be understood as a manner of monitoring the second PDCCH.

Here, the DRX onduration timer can be started to achieve the effect of dynamically adjusting a start time point of the DRX onduration based on whether a wake-up signal has been detected.

In a case that the wake-up signal has been detected, PDSCH monitoring is performed. Optionally, that the PDSCH monitoring is performed includes: receiving a semi-persistent scheduling (Semi-Persistent Scheduling, SPS) PDSCH.

Here, the SPS PDSCH may include at least one of the following: preconfigured SPS PDSCH, SPS PDSCH corresponding to pre-determined logic channel priority, and SPS PDSCH corresponding to pre-determined quality of service (Quality of Service, QoS).

Optionally, the wake-up signal type is associated with the downlink channel monitoring operation.

Thus, in the case that the wake-up signal has been detected, the associated downlink channel monitoring operation can be specifically performed based on a wake-up signal type of the wake-up signal.

Optionally, the wake-up signal type is associated with a service type and priority.

Thus, different wake-up signal types can be associated with different service types or service priorities. For example, the wake-up signal type is associated with a service with a specified QoS requirement or priority; the wake-up signal type is associated with a service with a specified logical channel priority; the wake-up signal type is associated with a specified service, for example, an XR service; or the wake-up signal type is associated with an adaptive transmission base layer or enhanced layer. For example, a wake-up signal type 1 represents that a wake-up signal 1 is configured for an XR service. In a case that the wake-up signal type 1 is associated with a target-PDCCH (a PDCCH associated with the XR service) monitoring operation, the target-PDCCH monitoring operation is performed when the wake-up signal 1 has been detected.

It should be noted that in this embodiment, optionally, that the wake-up signal has been detected includes:
the wake-up signal has been detected; or
that the wake-up signal indicates wake-up has been detected.

In this way, the terminal performs the downlink channel monitoring operation in a case that the terminal has detected the wake-up signal. Certainly, in a case that the wake-up signal further indicates whether to wake up, the terminal performs the downlink channel monitoring operation only in a case that the terminal has detected that the wake-up signal indicates wake-up.

Optionally, that the wake-up signal has been detected includes:
matching a currently detected signal sequence against a wake-up signal sequence, and determining that the wake-up signal has been detected after the matching has succeeded; or
comparing signal strength of a currently detected signal with a preset detecting threshold, and determining that the wake-up signal has been detected in a case that the signal strength of the currently detected signal is greater than or equal to the preset detecting threshold.

In other words, whether the wake-up signal has been detected is determined by matching the signal sequences or by comparing the signal strength with the preset detecting threshold. Wake-up signals with different service priorities correspond to different preset detecting thresholds. For example, for a base layer, the preset detecting threshold is small; and for an enhanced layer (which has a higher requirement on channel quality), the preset detecting threshold is large. Specifically, the preset detecting threshold may be configured by a network-side device.

It should be further noted that in this embodiment, optionally, the performing a downlink channel monitoring operation in a case that the terminal has detected the wake-up signal includes:
performing the downlink channel monitoring operation at a first time point after the terminal has detected the wake-up signal, where
a time interval between the first time point and a time point at which the wake-up signal has been detected is configured or defined.

In other words, there is a certain delay between the time point at which the terminal has detected the wake-up signal and a time point at which the terminal performs the downlink channel monitoring operation, and this delay can be understood as a transition delay. This transition delay (that is, a time interval between the first time point and the time point at which the wake-up signal has been detected) may be configured or indicated by the network-side device or may be pre-defined. For example, in a case that the network-side device does not configure or indicate the transition delay, the terminal performs the downlink channel monitoring operation after X time units following an end time point, where the end time point is of a time unit (for example, a symbol (symbol) or a slot (slot)) in which the wake-up signal has been detected, and X is greater than or equal to 1.

The time interval may be associated with a sub-carrier spacing (Sub Carrier Space, SCS) level.

Optionally, the method further includes:
skipping, by the terminal, reception and/or transmission within the time interval.

In other words, within the time interval, the terminal does not perform any reception and/or transmission.

Optionally, in this embodiment, the wake-up signal carries indication information associated with the downlink channel monitoring operation; and
the performing a downlink channel monitoring operation includes:
performing, by the terminal, the downlink channel monitoring operation based on the indication information.

To be specific, in the case that the terminal has detected the wake-up signal, the terminal can perform the corresponding downlink channel monitoring operation based on the indication information carried in the wake-up signal, and the indication information is associated with the downlink channel monitoring operation.

For example, the wake-up signal carries indication information for a downlink channel monitoring operation 1. In a case that the downlink channel monitoring operation 1 is switching to a non-dormant BWP 2, the terminal switches to the non-dormant BWP 2 to perform PDCCH monitoring after the terminal has detected the wake-up signal.

Optionally, in this embodiment, the method further includes:
in a case that the wake-up signal has not been detected within N consecutive monitoring occasions, stopping, by the terminal, subsequent wake-up signal monitoring, where N is a positive integer greater than or equal to 1.

Here, in the case that the wake-up signal has not been detected within N consecutive monitoring occasions, the subsequent wake-up signal monitoring is stopped, so as to avoid power consumption for continuous monitoring.

Certainly, that the wake-up signal has not been detected may mean that the wake-up signal has not been detected or that the wake-up signal detected indicates no wake-up. That the wake-up signal has not been detected means that signal sequences do not match or that the signal strength does not satisfy the preset detecting threshold.

It should be further noted that optionally, in this embodiment, the method further includes:
skipping, by the terminal, monitoring the wake-up signal within a second time period, where the second time period includes at least one of the following:
DRX active time (active time);
first-PDCCH monitoring period;
active time of non-dormant BWP; and
active time of non-dormant search space group.

That the terminal skips monitoring the wake-up signal within the second time period mentioned above has reduced power consumption.

In addition, in this embodiment, optionally, the wake-up signal is a terminal-specific wake-up signal or a common group wake-up signal.

Here, the terminal-specific wake-up signal is a wake-up signal for a specific terminal. The common wake-up signal for a group refers to a wake-up signal for indicating a group of terminals.

The following describes the application of the method provided in this embodiment of this application with reference to specific scenarios.

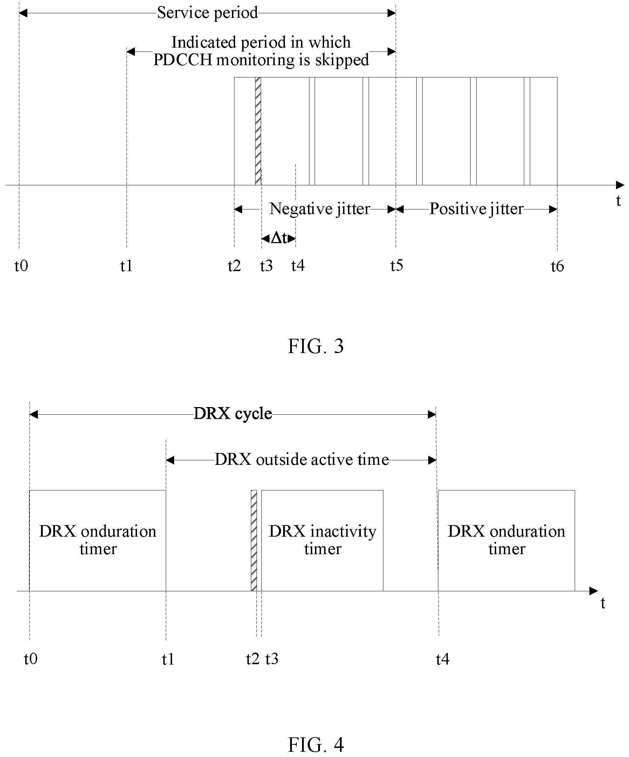

Scenario 1: As shown in FIG. 3, the network-side device configures a wake-up signal; a monitoring start position for the wake-up signal is configured with respect to a quasi-periodic arrival position t5 (for example, a service period (t0 to t5) is 16.67 ms) of an XR downlink video (Downlink video, DL video) service packet, with the monitoring start position for the wake-up signal configured at a position t2 of a negative jitter length before the quasi-periodic arrival position t5 of the service packet. A monitoring duration for the wake-up signal is equal to a jitter range of the XR DL video service packet, where the jitter range is ±4 ms. In this case, the monitoring duration (t2 to t6) is equivalent to a detecting window, and a central position of the window is the quasi-periodic arrival position t5 of the service packet. A monitoring period for the wake-up signal is equal to a quasi-period of the XR DL video service packet.

At a time point 11, the terminal receives a PDCCH skipping command (PDCCH skipping command) from the network-side device, and this command instructs that until a next quasi-periodic arrival position of data packet approaches, PDCCH monitoring be skipped.

Based on the above configuration for the wake-up signal, the terminal monitors the wake-up signal in a corresponding wake-up signal monitoring occasion and monitoring duration in a PDCCH non-monitoring state (that is, within a PDCCH skipping duration indicated by the network-side device, to be specific, within the first time period).

Jitter is present in an actual arrival time of the XR DL video service packet, and jitter = -3 ms as shown in FIG. 3, meaning that the service packet actually arrives 3 ms earlier than expected. Therefore, after receiving the service packet, the network-side device needs to immediately wake up the terminal that is in a PDCCH monitoring skipping state at present so as to implement subsequent data scheduling.

As shown in FIG. 3, when the terminal has detected that a wake-up signal indicates wake-up at a monitoring occasion of this wake-up signal (that is, a monitoring occasion at a time point t3), the terminal starts to enter a PDCCH monitoring state (performing PDCCH monitoring), and steps include, for example, turning on a radiofrequency transceiver module, a baseband processing module, and the like. Within the monitoring duration (t2 to t6), a monitoring occasion after the monitoring occasion at the time point t3 is an invalid wake-up signal monitoring occasion.

Here, in terms of transition delay (that is Δt, where Δt=t4-t3), a preset transition delay is related to an SCS level. In a case that a current SCS is 30 kHz, the transition delay can be determined as one slot. To be specific, one slot after receiving the wake-up signal that indicates wake-up, the terminal ends the present PDCCH skipping in advance to enter the PDCCH monitoring state.

In this way, for the XR DL video service packet with jitter, the network-side device can, through the wake-up signal with corresponding configuration information, wake up the terminal that is in the PDCCH monitoring skipping state in advance for service packet transmission, thereby reducing data transmission delay caused by energy saving, avoiding packet loss caused by a packet delay budget (Packet Delay Budget, PDB) of the data packet being exceeded due to scheduling delay, and balancing energy saving and data transmission performance.

Scenario 2: As shown in FIG. 4, the network-side device configures DRX, for example, a DRX onduration timer and a DRX cycle (t0 to t4). The network-side device configures a wake-up signal, a monitoring start position for the wake-up signal is configured with respect to a DRX start position (for example, the DRX cycle is 160 ms), with the monitoring start position for the wake-up signal configured at a position t1 before the DRX start position t4; a monitoring duration for the wake-up signal is 10 ms; and a monitoring period for the wake-up signal is equal to a DRX cycle.

Based on the above configuration for the wake-up signal, the terminal monitors the wake-up signal in a corresponding wake-up signal monitoring occasion and monitoring duration within a DRX outside active time (that is, within a PDCCH skipping duration indicated by the network-side device, to be specific, within the first time period).

The service packet may arrive in a DRX off stage (DRX outside active time). Therefore, after receiving the service packet, in a case that there is a wake-up signal occasion subsequently, the network-side device needs to wake up the terminal that is in a PDCCH monitoring skipping state at present so as to implement subsequent data scheduling.

As shown in FIG. 4, when the terminal has detected that a wake-up signal indicates wake-up in a monitoring occasion of this wake-up signal (that is, a monitoring occasion at a time point t2), the terminal starts to enter a PDCCH monitoring state (performing PDCCH monitoring), in a manner of immediately starting a DRX inactivity timer after a transition delay (that is, at a time point t3), and the network-side device can perform operations such as PDCCH transmission and data scheduling within the duration of the timer.

Thus, for the possibility of a service packet arriving within the DRX outside active time, the network-side device can wake up, through the wake-up signal with corresponding configuration information, the terminal in a dormant state in advance for service packet transmission, thereby reducing data transmission delay caused by energy saving, balancing energy saving and data transmission performance, and being applicable to delay-sensitive service transmission.

It should be noted that the transmission processing method provided in this embodiment of this application may be performed by a transmission processing apparatus or a control module for performing or loading the transmission processing method in the transmission processing apparatus. This embodiment of this application describes the transmission processing method provided in this embodiment of this application by using an example in which the transmission processing apparatus performs and loads the transmission processing method.

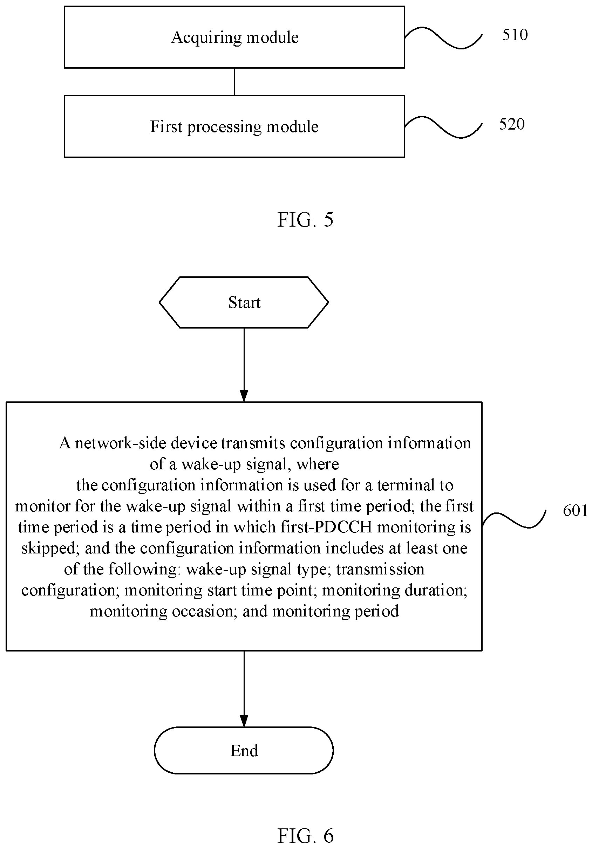

As shown in FIG. 5, a transmission processing apparatus according to an embodiment of this application includes:
an acquiring module 510, configured to acquire configuration information of a wake-up signal; and
a first processing module 520, configured to monitor the wake-up signal based on the configuration information within a first time period, where the first time period is a time period in which first-physical-downlink-control-channel PDCCH monitoring is skipped; where
the configuration information includes at least one of the following:
   wake-up signal type;
   transmission configuration;
   monitoring start time point;
   monitoring duration;
   monitoring occasion; and
   monitoring period.

Optionally, the first time period includes at least one of the following:
discontinuous reception DRX outside active time;
DCI-indicated period in which the first-PDCCH monitoring is skipped;
active time of dormant bandwidth part BWP; and
active time of dormant search space group, where within the active time of dormant search space group, the first-PDCCH monitoring is skipped.

Optionally, the monitoring start time point is associated with at least one of the following:
quasi-periodic arrival position of service packet;
jitter range of service packet;
DRX onduration start position.

Optionally, one or more monitoring occasions are present within the monitoring duration.

Optionally, the monitoring duration is associated with at least one of the following:
jitter range of service packet;
positive jitter range of service packet; and
negative jitter range of service packet.

Optionally, the monitoring period is associated with at least one of the following:
DRX cycle; and
quasi-period of service packet.

Optionally, the apparatus further includes:
a second processing module, configured to perform a downlink channel monitoring operation in a case that the wake-up signal has been detected.

Optionally, the performing a downlink channel monitoring operation includes at least one of the following:
monitoring a second PDCCH; and
monitoring a physical downlink control channel PDSCH.

Optionally, the monitoring a second PDCCH includes at least one of the following:
starting a DRX onduration timer or a DRX inactivity timer;
switching to a non-dormant BWP;
switching to a non-dormant search space group;
turning off a first timer that is running, where the terminal skips the first-PDCCH monitoring when the first timer is on; and
stopping performing a first-PDCCH monitoring skipping indication.

Optionally, the monitoring a PDSCH includes: receiving semi-persistent scheduling SPS PDSCH.

Optionally, the wake-up signal type is associated with the downlink channel monitoring operation.

Optionally, the wake-up signal is a specific wake-up signal for the terminal or a common wake-up signal for a group.

Optionally, the second processing module is further configured to:
perform the downlink channel monitoring operation at a first time point after the wake-up signal has been detected, where
a time interval between the first time point and a time point at which the wake-up signal has been detected is configured or defined.

Optionally, the apparatus further includes:
a third processing module, configured to perform no reception and/or no transmission within the time interval.

Optionally, that the wake-up signal has been detected includes:
the wake-up signal has been detected; or
that the wake-up signal indicates wake-up has been detected.

Optionally, that the wake-up signal has been detected includes:
matching a currently detected signal sequence against a wake-up signal sequence, and determining that the wake-up signal has been detected after the matching has succeeded; or
comparing signal strength of a currently detected signal with a preset detecting threshold, and determining that the wake-up signal has been detected in a case that the signal strength of the currently detected signal is greater than or equal to the preset detecting threshold.

Optionally, the preset detecting threshold is associated with the wake-up signal type.

Optionally, the wake-up signal carries indication information associated with the downlink channel monitoring operation.

The indication information is used to indicate the terminal to perform the downlink channel monitoring operation.

Optionally, the apparatus further includes:
a fourth processing module, configured to stop monitoring the subsequent wake-up signal in a case that the wake-up signal has not been detected within N consecutive monitoring occasions, where N is a positive integer greater than or equal to 1.

Optionally, the apparatus further includes:
a fifth processing module, configured to skip monitoring the wake-up signal within a second time period, where the second time period includes at least one of the following:
DRX active time;
first-PDCCH monitoring period;
active time of non-dormant BWP; and
active time of non-dormant search space group.

The apparatus monitors the wake-up signal based on the acquired configuration information of the wake-up signal within a time period in which the first-PDCCH monitoring is skipped. In this embodiment of this application, the terminal monitors the wake-up signal within the time period in which the first-PDCCH monitoring is skipped to implement timely processing of data that will arrive in the time period in which the first-PDCCH monitoring is skipped, thereby reducing packet transmission delay for this part of data and improving transmission performance. In addition, the terminal consumes very limited energy in wake-up signal monitoring. Therefore, the technical effects of guaranteeing data transmission performance without reducing energy-saving gain can be achieved.

In this embodiment of this application, the transmission processing apparatus may be an apparatus, an apparatus or electronic device having an operating system, or a component, integrated circuit or chip in a terminal. The terminal or electronic device may be a mobile terminal or a non-mobile terminal. For example, the mobile terminal includes but is not limited to the foregoing listed types of the terminal 11, and the non-mobile terminal may be a server, a network attached storage (Network Attached Storage, NAS), a personal computer (Personal Computer, PC), a television (Television, TV), a teller machine, or a self-service machine. This is not specifically limited in this embodiment of this application.

The transmission processing apparatus provided in this embodiment of this application can implement the processes that are implemented by the terminal in the method embodiments of FIG. 2 to FIG. 4. To avoid repetition, details are not described herein again.

As shown in FIG. 6, a transmission processing method according to an embodiment of this application includes the following steps.

Step 601. A network-side device transmits configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

After the configuration information of the wake-up signal transmitted by the network-side device is received by the terminal, the terminal can monitor the wake-up signal based on the received configuration information within a time period in which the first-PDCCH monitoring is skipped. The terminal monitors the wake-up signal within the time period in which the first-PDCCH monitoring is skipped to implement timely processing of data in the time period in which the first-PDCCH monitoring is skipped, thereby reducing transmission delay of this part of data packets and improving transmission performance. In addition, the terminal consumes very limited energy in wake-up signal monitoring. Therefore, the technical effects of guaranteeing data transmission performance without reducing energy-saving gain can be achieved.

Optionally, the first time period includes at least one of the following:
discontinuous reception DRX outside active time;
period in which PDCCH monitoring is skipped;
active time of dormant bandwidth part BWP; and
active time of dormant search space group.

Optionally, the monitoring start time point is associated with at least one of the following:
quasi-periodic arrival position of service packet;
jitter range of service packet; and
DRX onduration start position.

Optionally, one or more monitoring occasions are present within the monitoring duration.

Optionally, the monitoring duration is associated with at least one of the following:
jitter range of service packet;
positive jitter range of service packet; and
negative jitter range of service packet.

Optionally, the monitoring period is associated with at least one of the following:
DRX cycle; and
quasi-period of service packet.

Optionally, the wake-up signal type is associated with a downlink channel monitoring operation.

Optionally, the wake-up signal is a specific wake-up signal for the terminal or a common wake-up signal for a group.

Optionally, the wake-up signal carries indication information associated with the downlink channel monitoring operation.

It should be noted that the method is implemented in cooperation with the method implemented by the terminal in the foregoing embodiment, and the implementation of the foregoing method embodiment is applicable to this method, with the same technical effects achieved.

It should be further noted that the transmission processing method provided in this embodiment of this application may be performed by a transmission processing apparatus or a control module for performing the transmission processing method in the transmission processing apparatus. This embodiment of this application describes the transmission processing method provided in this embodiment of this application by using an example in which the transmission processing apparatus performs and loads the transmission processing method.

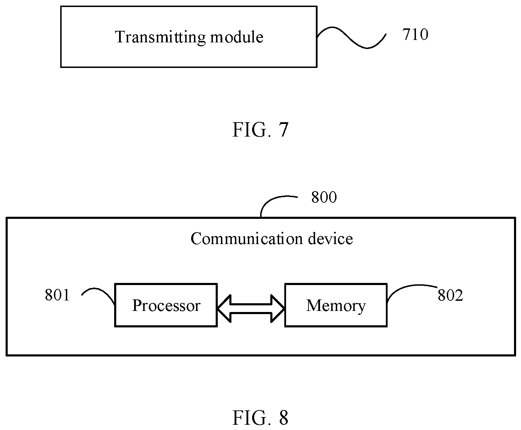

As shown in FIG. 7, a transmission processing apparatus according to an embodiment of this application includes:
a transmitting module 710, configured to transmit configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

Optionally, the first time period includes at least one of the following:
discontinuous reception DRX outside active time;
period in which PDCCH monitoring is skipped;
active time of dormant bandwidth part BWP; and
active time of dormant search space group.

Optionally, the monitoring start time point is associated with at least one of the following:
quasi-periodic arrival position of service packet;
jitter range of service packet; and
DRX onduration start position.

Optionally, one or more monitoring occasions are present within the monitoring duration.

Optionally, the monitoring duration is associated with at least one of the following:
jitter range of service packet;
positive jitter range of service packet; and
negative jitter range of service packet.

Optionally, the monitoring period is associated with at least one of the following:
DRX cycle; and
quasi-period of service packet.

Optionally, the wake-up signal type is associated with a downlink channel monitoring operation.

Optionally, the wake-up signal is a specific wake-up signal for the terminal or a common wake-up signal for a group.

Optionally, the wake-up signal carries indication information associated with the downlink channel monitoring operation, and the indication information is used to indicate the terminal to perform the downlink channel monitoring operation.

After the configuration information of the wake-up signal transmitted by the apparatus is received by the terminal, the terminal can monitor the wake-up signal based on the received configuration information within a time period in which the first-PDCCH monitoring is skipped. The terminal monitors the wake-up signal within the time period in which the first-PDCCH monitoring is skipped to implement timely processing of data in the time period in which the first-PDCCH monitoring is skipped, thereby reducing transmission delay of this part of data packets and improving transmission performance. In addition, the terminal consumes very limited energy in wake-up signal monitoring. Therefore, the technical effects of guaranteeing data transmission performance without reducing energy-saving gain can be achieved.

In this embodiment of this application, the transmission processing apparatus may be an apparatus, or an apparatus or network-side device having an operating system. For example, the network-side device includes but is not limited to the foregoing listed types of the network-side device 12. This is not specifically limited in this embodiment of this application.

The transmission processing apparatus provided in this embodiment of this application can implement the processes that are implemented by the network-side device in the method embodiments of FIG. 2 to FIG. 4. To avoid repetition, details are not described herein again.

A terminal according to an embodiment of this application includes a processor, a memory, and a program or instructions stored in the memory and capable of running on the processor, where when the program or instructions are executed by the processor, the steps of the foregoing transmission processing method performed by the terminal are implemented.

A network-side device according to an embodiment of this application includes a processor, a memory, and a program or instructions stored in the memory and capable of running on the processor, where when the program or instructions are executed by the processor, the steps of the transmission processing method performed by the network-side device are implemented.

Optionally, as shown in FIG. 8, an embodiment of this application further provides a communication device including a processor 801, a memory 802, and a program or instructions stored in the memory 802 and capable of running on the processor 801. For example, in a case that the communication device 800 is a terminal, when the program or instructions are executed by the processor 801, the processes of the foregoing transmission processing method embodiments performed by the terminal are implemented, with the same technical effects achieved. In a case that the communication device 800 is a network-side device, when the program or instructions are executed by the processor 801, the processes of the foregoing transmission processing method embodiments implemented by the network-side device are implemented, with the same technical effects achieved. To avoid repetition, details are not described herein again.

An embodiment of this application further provides a terminal including a processor and a communication interface, where the communication interface is configured to acquire configuration information of a wake-up signal; the processor is configured to monitor the wake-up signal based on the configuration information within a first time period, where
the first time period is a time period in which first-physical-downlink-control-channel PDCCH monitoring is skipped; and
the configuration information includes at least one of the following:
   wake-up signal type;
   transmission configuration;
   monitoring start time point;
   monitoring duration;
   monitoring occasion; and
   monitoring period.

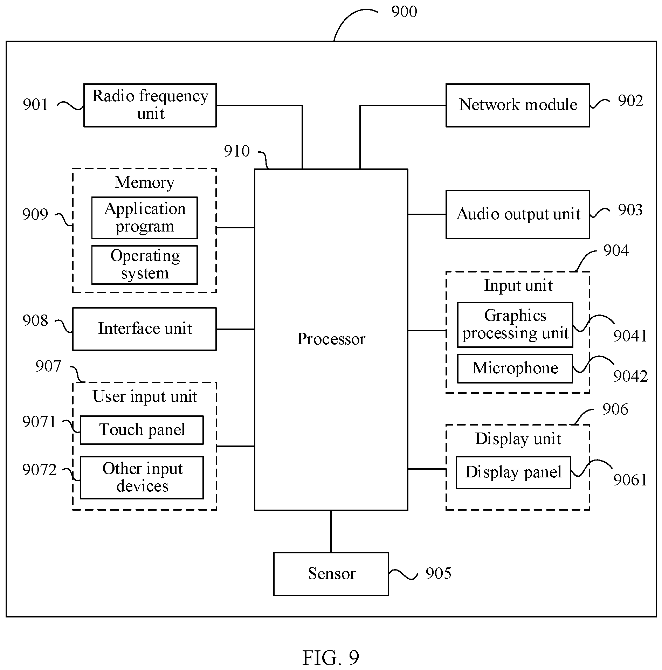

This terminal embodiment corresponds to the foregoing terminal side method embodiment. All implementation processes and implementation manners of the foregoing method embodiment are applicable to this terminal embodiment, with the same technical effects achieved. Specifically, FIG. 9 is a schematic diagram of a hardware structure of a terminal according to each embodiment of this application.

The terminal 900 includes but is not limited to at least some components of a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (such as a battery) for supplying power to the components. The power supply may be logically connected to the processor 910 through a power management system. In this way, functions such as charge management, discharge management, and power consumption management are implemented by using the power management system. The structure of the terminal shown in FIG. 9 does not constitute any limitation on the terminal, and the terminal may include more or fewer components than shown in the figure, or combine some of the components, or have different component arrangements. Details are not described herein again.

It should be understood that in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a functional button (such as a volume control button or an on/off button), a trackball, a mouse, and a joystick. Details are not described herein again.

In this embodiment of this application, the radio frequency unit 901 sends downlink data received from a network-side device to the processor 910 for processing, and in addition, sends uplink data to the network-side device. Generally, the radio frequency unit 901 includes but is not limited to an antenna, at least one amplifier, a transceiver, a coupler, a low noise amplifier, and a duplexer.

The memory 909 may be configured to store software programs or instructions and various data. The memory 909 may mainly include a program or instruction storage area and a data storage area. The program or instruction storage area may store an operating system, an application program or instructions required by at least one function (for example, a sound play function and an image play function), and the like. In addition, the memory 909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or another non-volatile solid-state storage device.

The processor 910 may include one or more processing units. Optionally, the processor 910 may integrate an application processor and a modem processor. The application processor mainly processes an operating system, a user interface, an application program or instructions, or the like. The modem processor mainly processes wireless communication, for example, a baseband processor. It can be understood that the modem processor may alternatively be not integrated in the processor 910.

The radio frequency unit 901 is configured to acquire configuration information of a wake-up signal.

The processor 910 is configured to monitor the wake-up signal based on the configuration information within a first time period, where
the first time period is a time period in which first-physical-downlink-control-channel PDCCH monitoring is skipped; and
the configuration information includes at least one of the following:
   wake-up signal type;
   transmission configuration;
   monitoring start time point;
   monitoring duration;
   monitoring occasion; and
   monitoring period.

The terminal monitors the wake-up signal based on the acquired configuration information of the wake-up signal within a time period in which the first-PDCCH monitoring is skipped. In this embodiment of this application, the terminal monitors the wake-up signal within the time period in which the first-PDCCH monitoring is skipped to implement timely processing of data that will arrive in the time period in which the first-PDCCH monitoring is skipped, thereby reducing packet transmission delay for this part of data and improving transmission performance. In addition, the terminal consumes very limited energy in wake-up signal monitoring. Therefore, this embodiment of this application can achieve the technical effects of guaranteeing data transmission performance without reducing energy-saving gain.

Optionally, the processor 910 is further configured to:
perform a downlink channel monitoring operation in a case that the wake-up signal has been detected.

Optionally, the processor 910 is further configured to:
perform the downlink channel monitoring operation at a first time point after the wake-up signal has been detected, where
a time interval between the first time point and a time point at which the wake-up signal has been detected is configured or defined.

Optionally, the processor 910 is further configured to:
perform no reception and/or no transmission within the time interval.

Optionally, the processor 910 is further configured to:
stop monitoring the subsequent wake-up signal in a case that the wake-up signal has not been detected within N consecutive monitoring occasions, where N is a positive integer greater than or equal to 1.

Optionally, the processor 910 is further configured to:
skip monitoring the wake-up signal within a second time period, where the second time period includes at least one of the following:
DRX active time;
first-PDCCH monitoring period;
active time of non-dormant BWP; and
active time of non-dormant search space group.

An embodiment of this application further provides a network-side device including a processor and a communication interface that is configured to transmit configuration information of a wake-up signal, where
the configuration information is used for a terminal to monitor the wake-up signal within a first time period;
the first time period is a time period in which first-PDCCH monitoring is skipped; and
the configuration information includes at least one of the following:
   wake-up signal type;
   transmission configuration;
   monitoring start time point;
   monitoring duration;
   monitoring occasion; and
   monitoring period.

The network-side device embodiment corresponds to the foregoing network-side device method embodiment. All implementation processes and implementation manners of the foregoing method embodiment are applicable to this network-side device embodiment, with the same technical effects achieved.

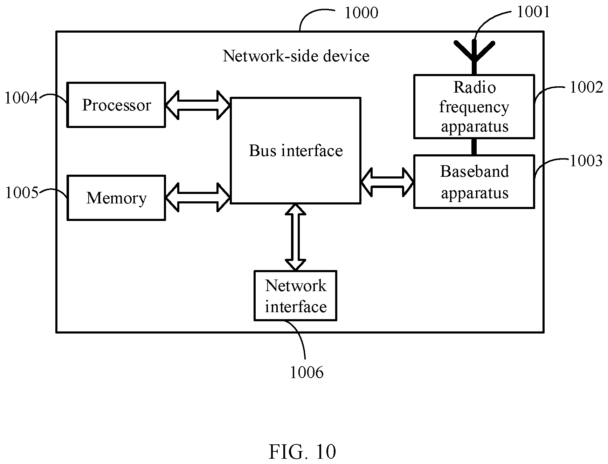

Specifically, an embodiment of this application further provides a network-side device. As shown in FIG. 10, the network-side device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001 and transmits the received information to the baseband apparatus 1003 for processing. In a downlink direction, the baseband apparatus 1003 processes to-be-transmitted information and transmits the information to the radio frequency apparatus 1002; and the radio frequency apparatus 1002 processes the received information and then transmits the information by using the antenna 1001.

A frequency band processing apparatus may be located in the baseband apparatus 1003. The method performed by the network-side device in the foregoing embodiment may be implemented in the baseband apparatus 1003, and the baseband apparatus 1003 includes a processor 1004 and a memory 1005.

The baseband apparatus 1003 may include, for example, at least one baseband processing unit, where a plurality of chips are disposed on the baseband processing unit. As shown in FIG. 10, one of the chips is, for example, the processor 1004 connected to the memory 1005, to invoke a program in the memory 1005 to perform the operations of the network-side device shown in the foregoing method embodiment.

The baseband apparatus 1003 may further include a network interface 1006 configured to exchange information with the radio frequency apparatus 1002, where the interface is, for example, a common public radio interface (Common Public Radio Interface, short for CPRI).

Specifically, the network-side device in this embodiment of this application further includes instructions or a program stored in the memory 1005 and capable of running on the processor 1004. The processor 1004 invokes the instructions or program in the memory 1005 to perform the method performed by the modules shown in FIG. 7, with the same technical effects achieved. To avoid repetition, details are not described herein again.

An embodiment of this application further provides a readable storage medium. The readable storage medium may be non-volatile or volatile, the readable storage medium stores a program or instructions, and when the program or instructions are executed by a processor, the processes of the foregoing transmission processing method embodiment are implemented, with the same technical effects achieved. To avoid repetition, details are not described herein again.

An embodiment of this application further provides a computer program product. The computer program product is stored in a non-transient storage medium, and the computer program product is executed by at least one processor to implement the steps of the transmission processing method in the embodiments of this application, with the same technical effects achieved. To avoid repetition, details are not described herein again.

The processor is the processor in the terminal in the foregoing embodiments. The readable storage medium includes a computer-readable storage medium such as a computer read-only memory (Read-Only Memory, short for ROM), a random access memory (Random Access Memory, short for RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing transmission processing method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or other variants thereof are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order illustrated or discussed, but may also include performing the functions in a substantially simultaneous manner or in a reverse order depending on the functions involved. For example, the described method may be performed in an order different from the order described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The computer software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from the essence of this application and the protection scope of the claims, and all such manners shall fall within the protection scope of this application.

## Claims

1. A transmission processing method, comprising:
acquiring, by a terminal, configuration information of a wake-up signal; and
monitoring, by the terminal, the wake-up signal based on the configuration information within a first time period, wherein the first time period is a time period in which first-physical-downlink-control-channel PDCCH monitoring is skipped; wherein
the configuration information comprises at least one of the following:
wake-up signal type;
transmission configuration;
monitoring start time point;
monitoring duration;
monitoring occasion; and
monitoring period.

2. The method according to claim 1, wherein the monitoring start time point is associated with at least one of the following:
quasi-periodic arrival position of service packet;
jitter range of service packet; and
DRX onduration start position.

3. The method according to claim 1, wherein the monitoring duration is associated with at least one of the following:
jitter range of service packet;
positive jitter range of service packet; and
negative jitter range of service packet.

4. The method according to claim 1, further comprising:
performing a downlink channel monitoring operation in a case that the terminal has detected the wake-up signal.

5. The method according to claim 4, wherein the performing a downlink channel monitoring operation comprises at least one of the following:
monitoring a second PDCCH; and
monitoring a physical downlink control channel PDSCH.

6. The method according to claim 5, wherein the monitoring a second PDCCH comprises at least one of the following:
starting a DRX onduration timer or a DRX inactivity timer;
switching to a non-dormant BWP;
switching to a non-dormant search space group;
turning off a first timer that is running, wherein the terminal skips the first-PDCCH monitoring when the first timer is on; and
stopping performing a first-PDCCH monitoring skipping indication.

7. The method according to claim 5, wherein the monitoring a PDSCH comprises: receiving a semi-persistent scheduling SPS PDSCH.

8. The method according to claim 4, wherein the wake-up signal type is associated with the downlink channel monitoring operation.

9. The method according to claim 1, wherein the first time period comprises at least one of the following:
discontinuous reception DRX outside active time;
DCI-indicated period in which the first-PDCCH monitoring is skipped;
active time of dormant bandwidth part BWP; and
active time of dormant search space group, wherein within the active time of dormant search space group, the first-PDCCH monitoring is skipped.

10. The method according to claim 1, wherein the monitoring period is associated with at least one of the following:
DRX cycle; and
quasi-period of service packet.

11. The method according to claim 4, wherein the performing a downlink channel monitoring operation in a case that the terminal has detected the wake-up signal comprises:
performing the downlink channel monitoring operation at a first time point after the terminal has detected the wake-up signal, wherein
a time interval between the first time point and a time point at which the wake-up signal has been detected is configured or defined.

12. The method according to claim 11, further comprising:
skipping, by the terminal, reception and/or transmission within the time interval.

13. The method according to claim 4, wherein that the wake-up signal has been detected comprises:
the wake-up signal has been detected; or
that the wake-up signal indicates wakeup has been detected.

14. The method according to claim 13, wherein that the wake-up signal has been detected comprises:
matching a currently detected signal sequence against a wake-up signal sequence, and determining that the wake-up signal has been detected after the matching has succeeded; or
comparing signal strength of a currently detected signal with a preset detecting threshold, and determining that the wake-up signal has been detected in a case that the signal strength of the currently detected signal is greater than or equal to the preset detecting threshold.

15. The method according to claim 14, wherein the preset detecting threshold is associated with the wake-up signal type.

16. The method according to claim 4, wherein a wake-up signal carries indication information associated with the downlink channel monitoring operation; and
the performing a downlink channel monitoring operation comprises:
performing, by the terminal, the downlink channel monitoring operation based on the indication information.

17. The method according to claim 1, further comprising:
in a case that the wake-up signal has not been detected within N consecutive monitoring occasions, stopping, by the terminal, subsequent wake-up signal monitoring, wherein N is a positive integer greater than or equal to 1.

18. The method according to claim 1, further comprising:
skipping, by the terminal, monitoring the wake-up signal within a second time period, wherein the second time period comprises at least one of the following:
DRX active time;
first-PDCCH monitoring period;
active time of non-dormant BWP; and
active time of non-dormant search space group.

19. A transmission processing method, comprising:
transmitting, by a network-side device, configuration information of a wake-up signal, wherein
the configuration information is used for a terminal to monitor the wake-up signal within a first time period;
the first time period is a time period in which first-PDCCH monitoring is skipped; and
the configuration information comprises at least one of the following:
wake-up signal type;
transmission configuration;
monitoring start time point;
monitoring duration;
monitoring occasion; and
monitoring period.

20. The method according to claim 19, wherein the first time period comprises at least one of the following:
discontinuous reception DRX outside active time;
period in which PDCCH monitoring is skipped;
active time of dormant bandwidth part BWP; and
active time of dormant search space group.

21. The method according to claim 19, wherein the monitoring start time point is associated with at least one of the following:
quasi-periodic arrival position of service packet;
jitter range of service packet; and
DRX onduration start position.

22. The method according to claim 19, wherein the monitoring duration is associated with at least one of the following:
jitter range of service packet;
positive jitter range of service packet; and
negative jitter range of service packet.

23. The method according to claim 19, wherein the monitoring period is associated with at least one of the following:
DRX cycle; and
quasi-period of service packet.

24. A transmission processing apparatus, comprising:
an acquiring module, configured to acquire configuration information of a wake-up signal; and
a first processing module, configured to monitor the wake-up signal based on the configuration information within a first time period, wherein the first time period is a time period in which first-physical-downlink-control-channel PDCCH monitoring is skipped; wherein
the configuration information comprises at least one of the following:
wake-up signal type;
transmission configuration;
monitoring start time point;
monitoring duration;
monitoring occasion; and
monitoring period.

25. A transmission processing apparatus, comprising:
a transmitting module, configured to transmit configuration information of a wake-up signal, wherein
the configuration information is used for a terminal to monitor the wake-up signal within a first time period;
the first time period is a time period in which first-PDCCH monitoring is skipped; and
the configuration information comprises at least one of the following:
wake-up signal type;
transmission configuration;
monitoring start time point;
monitoring duration;
monitoring occasion; and
monitoring period.

26. A terminal, comprising a processor, a memory, and a program or instructions stored in the memory and capable of running on the processor, wherein when the program or instructions are executed by the processor, the steps of the transmission processing method according to any one of claims 1 to 18 are implemented.

27. A network-side device, comprising a processor, a memory, and a program or instructions stored in the memory and capable of running on the processor, wherein when the program or instructions are executed by the processor, the steps of the transmission processing method according to any one of claims 19 to 23 are implemented.

28. A readable storage medium, wherein the readable storage medium stores a program or instructions, and when the program or instructions are executed by a processor, the steps of the transmission processing method according to any one of claims 1 to 18 or the transmission processing method according to any one of claims 19 to 23 are implemented.

29. A chip, comprising a processor and a communication interface, wherein the communication interface is coupled to the processor, and the processor is configured to run a program or instructions to implement the steps of the transmission processing method according to any one of claims 1 to 18 or implement the steps of the transmission processing method according to any one of claims 19 to 23.

30. A computer program product, wherein the computer program product is stored in a non-transient readable storage medium, and the computer program product is executed by at least one processor to implement the steps of the transmission processing method according to any one of claims 1 to 18 or implement the steps of the transmission processing method according to any one of claims 19 to 23.

31. A communication device, configured to implement the steps of the transmission processing method according to any one of claims 1 to 18 or implement the steps of the transmission processing method according to any one of claims 19 to 23.
